# EUROPÄISCHE PATENTSCHRIFT

(11) **EP 3 401 167 B1**
(45) Veröffentlichungstag und Bekanntmachung des Hinweises auf die Patenterteilung: **29.01.2020**
(21) Anmeldenummer: 18176214.7
(22) Anmeldetag: 02.09.2016
(51) Int. Cl.: B60R 1/00, G08G 1/16, G08G 1/0967

(54) **SPIEGELERSATZSYSTEM ALS KAMERA-MONITOR-SYSTEM (KMS) EINES KRAFTFAHRZEUGS, INSBESONDERE EINES NUTZFAHRZEUGS**
MIRROR REPLACEMENT SYSTEM AS CAMERA DISPLAY SYSTEM OF A MOTOR VEHICLE, IN PARTICULAR A COMMERCIAL VEHICLE
SYSTÈME DE REMPLACEMENT DE RÉTROVISEUR EN TANT QUE SYSTÈME DE SURVEILLANCE PAR CÉMERA D'UN VÉHICULE AUTOMOBILE, EN PARTICULIER D'UN VÉHICULE UTILITAIRE

(30) Priorität: 02.09.2015 DE 102015011536
(43) Veröffentlichungstag der Anmeldung: 14.11.2018
(62) Teilanmeldung aus: 16001927.9
(73) Patentinhaber: MAN Truck & Bus SE, 80995 München (DE)
(72) Erfinder: Zimmermann, Andreas, 80995 München (DE); Bundschuh, Linus, 85757 Karslfeld (DE); Zaindl, Albert, 85302 Gerolsbach (DE); Ruch, Florian, 80809 München (DE)
(74) Vertreter: Liebl, Thomas

(56) Entgegenhaltungen:
- EP-A1- 1 865 479
- EP-A1- 2 763 404
- EP-A2- 2 744 191
- WO-A1-2012/131871
- JP-A- 2001 101 566
- JP-A- 2007 060 054
- US-A1- 2007 139 523

## Beschreibung

Die Erfindung betrifft ein Spiegelersatzsystem als Kamera-Monitor-System (KMS) eines Kraftfahrzeugs, insbesondere eines Nutzfahrzeugs nach dem Oberbegriff des Anspruchs 1. So ein Spiegelersatzsystem ist aus der WO 2012/131871 A1 bekannt.

Kraftfahrzeuge sind üblicherweise beidseitig mit Außenspiegeln im Sichtfeld eines Fahrers ausgerüstet, die ein seitliches rückwärtiges Umfeld des Kraftfahrzeugs erfassen. Insbesondere bei Nutzfahrzeugen sind dazu jeweils seitliche Spiegelsysteme vorgeschrieben, die aus mehreren Spiegeln bestehen, welche mit unterschiedlichen Größen und Spiegelkrümmungen Teilbereiche des seitlichen Umfelds erfassen. Seitliche Außenspiegel, insbesondere Spiegelsysteme aus mehreren Spiegeln haben den Nachteil, dass sie den Umwelteinflüssen unterliegen und damit verschmutzen, vereisen, usw., so dass das Spiegelbild nicht oder nur undeutlich erkennbar ist, und dann die Spiegelfunktion nur unzureichend erfüllt wird. Zudem sind Außenspiegel mit fernbedienbaren Stelleinrichtungen zur Lageeinstellung aufwendige, kostenintensive und großvolumige, weit vom Fahrzeug abragende Bauteile. Weiter bestehen bei Nutzfahrzeugen die Spiegelsysteme auf einer Fahrzeugseite jeweils aus mehreren zum Teil beabstandeten Einzelspiegeln, deren Spiegelbilder nur schwierig mit einem Blick erfasst und ausgewertet werden können.

Aufgrund der vorstehenden Gegebenheiten sind bereits Spiegelersatzsysteme als Kamera-Monitor-Systeme (KMS) allgemein bekannt. Ein solches Spiegelersatzsystem besteht wenigstens aus einer, ein Umfeld des Kraftfahrzeugs in einem Kamerabild in Echtzeit erfassender und aufnehmender Kamera, einem Steuergerät, dem Bilddaten aus der wenigstens einen Kamera zur Bearbeitung zugeführt werden, und wenigstens einem Monitor als Bildschirm im Sichtfeld eines Fahrers, der an das Steuergerät zur Darstellung eines Monitorbildes des von der Kamera erfassten aktuellen Kamerabildes angeschlossen ist. Üblicherweise sind fahrerseitig und beifahrerseitig Außenkameras angeordnet, deren Kamerasichtfelder den Spiegelaufnahmefeldern entsprechen können sowie sind jeweils zugeordnete Monitore im fahrerseitigen und beifahrerseitigen Fensterholmbereich im Fahrzeuginnenbereich angebracht. Bei Nutzfahrzeugen können Kameras verwendet werden, die die Sichtbereiche der üblichen Einzelspiegel erfassen und alle Sichtfelder einer Fahrzeugseite können in einem Monitorbild vereinigt werden.

Solche Spiegelersatzsysteme haben allgemein den Vorteil, dass verwendete Kameras im Vergleich zu Spiegeln wesentlich kleiner sind und Umwelteinflüsse besser beherrschbar sind. Zudem liegt der Monitor und damit das Monitorbild ohne Umwelteinflüsse im Fahrzeuginneren, insbesondere in einem Fahrerhaus eines Nutzfahrzeugs, und die Einzeldarstellungen können gut und schnell einsehbar in einem einzigen Monitorbild vereint werden. Ein solches Spiegelersatzsystem kann anstelle der bisherigen Spiegelanordnungen verwendet werden oder gegebenenfalls auch zusätzlich zu weiteren Außenspiegeln.

Aufgabe der Erfindung ist es, die Funktion eines Spiegelersatzsystems zur Sichtbarmachung eines Fahrzeugumfelds zu ergänzen und weiterzubilden.

Diese Aufgabe wird gelöst mit den Merkmalen des unabhängigen Anspruchs. Vorteilhafte Ausgestaltungen sind Gegenstand der darauf rückbezogenen Unteransprüche.

Gemäß Anspruch 1 ist ein Spiegelersatzsystem als Kamera-Monitor-System (KMS) eines Kraftfahrzeugs, insbesondere eines Nutzfahrzeugs, vorgesehen, mit wenigstens einer ein Umfeld des Kraftfahrzeugs in einem Kamerabild in Echtzeit erfassender und aufnehmender Kamera, mit wenigstens einem Steuergerät, dem Bilddaten aus der wenigstens einen Kamera zur Bearbeitung zugeführt werden, und mit wenigstens einem Monitor als Bildschirm im Sichtfeld eines Fahrers, der an das wenigstens eine Steuergerät zur Darstellung eines Monitorbildes des von der wenigstens einen Kamera erfassten aktuellen Kamerabildes angeschlossen ist. Erfindungsgemäß ist vorgesehen, dass mittels des Steuergeräts in das Monitorbild Informationsdarstellungen eingeblendet werden, die im Fahrzeug bereits an anderer Stelle angezeigt werden und/oder die durch Auswertung einer fahrzeugseitigen Sensorik erhalten werden und/oder die durch eine Informationsbearbeitung des Kamerabilds erzeugt werden und/oder die durch die Auswertung drahtlos von anderen Fahrzeugen oder ortsfesten Gegenständen bzw. Objekten übermittelten Daten generiert werden und/oder die virtuell erzeugte Fahrzeuge, Fahrzeugteile oder ortsfeste Gegenstände bzw. Objekte darstellen.

Solche im Monitorbild dargestellten Informationen helfen dem Fahrer während der Fahrt und können somit zur Sicherheit beitragen und/oder den Fahrer bei seinen anstrengenden Fahraufgaben entlasten. Bei Fahrzeugstillstand, das heißt bei Ruhepausen oder ähnlichen Halten dargestellte Informationen können den Fahrer zudem bei anderen Aufgaben unterstützen und entlasten.

Zweckmäßig werden zwei Monitore, ein fahrerseitiger Monitor an einem fahrerseitigen Fensterholmbereich und ein beifahrerseitiger Monitor an einem beifahrerseitigen Fensterholmbereich verwendet. Dabei können in einem Monitorbild in mehreren angrenzenden Bildfeldern die Kamerabilder mehrerer Bildfeldern zugeordneten Kameras dargestellt werden. Grundsätzlich können die Bilder mehrerer Kameras auf einem Monitor gezeigt oder alternativ das Bild einer Kamera in mehreren Monitoren angezeigt werden.

Die erfindungsgemäße Einblendung von Informationsdarstellungen kann je nach den Gegebenheiten permanent oder abhängig von bestimmten Fahrsituationen in beiden Monitoren oder auch nur im fahrerseitigen Monitor oder beifahrerseitigen Monitor erfolgen. Die eingeblendeten Informationsdarstellungen können insbesondere bei sicherheitsrelevanten Informationen gegebenenfalls durch eine akustische Ausgabe ergänzt werden.

In einer vorteilhaften ersten Ausbildung der Erfindung als Zusammenfassung konkreter Ausführungsformen wird die Informationsdarstellung optisch getrennt vom dargestellten Kamerabild in einem separaten Monitorbildbereich, vorzugsweise angrenzend an das Kamerabild in einem Rand- und/oder Eckbereich eingeblendet, wobei nachfolgende vorteilhafte Ausführungen vorgeschlagen werden:
Um eine Ablenkung des Fahrers durch ein Navigationssystem zu vermeiden, können vorteilhafte, einem Fahrer wichtige Informationen des Systems gegebenenfalls zusätzlich im Monitor eingeblendet und angezeigt werden. Die Einblendung kann permanent oder im Bedarfsfall fahrer- und/oder beifahrerseitig erfolgen.

Weiter kann zusätzlich die Rückmeldung über einen Blinkerstatus, die in der Regel in einem Kombiinstrument optisch und zudem akustisch erfolgt, zusätzlich in einem Monitor dargestellt werden. Die Einblendung erfolgt hier zweckmäßig je nach der Blinkerseite zugeordnet fahrer- oder beifahrerseitig.

Zudem können grundsätzlich Warnungen aus anderen Fahrerassistenzsystemen alleine oder zusätzlich zu anderen Anzeigen auf wenigstens einem der Monitore eingeblendet werden. Beispielsweise kann dies eine graphisch gestaltete Auffahrwarnung sein. Sieht der Fahrer zum Zeitpunkt der Auffahrwarnung in die Monitore, kann die Aufmerksamkeit des Fahrers durch die Einblendung auf den Bereich vor dem Fahrzeug gelenkt werden. Diese Einblendung erfolgt gegebenenfalls zusätzlich zu einer optischen Warnung im Hauptsichtbereich des Fahrers, die durch eine zusätzliche akustische Warnung unterstützt sein kann. Die Einblendung kann auf der Fahrer- und Beifahrerseite erfolgen.

Weiter kann ein Signalstatus einer Ampel aus übermittelten Ampeldaten erfolgen. Vorteilhaft kann der Fahrer während das Fahrzeug an einer Ampel steht gleichzeitig nur das Kamerabild und den eingeblendeten Ampelstatus im Blick behalten, wodurch das Risiko sinkt, schwächere Verkehrsteilnehmer, die sich neben dem Fahrzeug aufhalten, zu übersehen.

Frühwarnkonzepte von Fahrerassistenzsystemen sehen eine optische Warnausgabe an der Stelle vor, auf die die Aufmerksamkeit des Fahrers gelenkt werden soll. Erfindungsgemäß soll auf eine solche Warnausgabe seitenabhängig durch eine optische Warnausgabe am jeweiligen Monitor hingewiesen werden, die als Rahmen oder Balken gegebenenfalls blinkend und/oder in einer Warnfarbe eingeblendet wird. Dieses Konzept eignet sich insbesondere in Verbindung mit einem Abbiege- und Spurwechselassistenzsystem. Die entsprechende Einblendung erfolgt im erkannten Bedarfsfall und kann durch eine akustische Ausgabe ergänzt werden.

Erfindungsgemäß wird die eingeblendete Informationsdarstellung jeweils perspektivisch korrekt als sogenannte "Augmented Reality" im Monitorbild in eine Bilddarstellung eingeblendet und eingefügt, wobei hierfür folgende vorteilhafte Ausführungen vorgeschlagen werden:
In der Bilddarstellung wird auf eine bodenseitige Aufstandsfläche wenigstens ein Fahrzeugteil virtuell als eingeblendete Informationsdarstellung projiziert, wodurch dem Fahrer insbesondere bei Rangiervorgängen die Fahrzeugabmessungen besser gezeigt werden und Rangierabstände besser abgeschätzt werden können. Konkret können zum Beispiel abstehende Kameraarme im dargestellten Monitorbild auf den Boden projiziert werden, da die Kameras, um die Perspektive konventioneller Spiegel zu erreichen, in der Regel nicht direkt an der Fahrzeugseite sondern etwas nach außen versetzt angebaut werden. Da die Kameraarme und Kameras meist kleiner als konventionelle Spiegel sind und weiter oben angebracht werden, können diese vom Fahrer gegebenenfalls nicht direkt gesehen werden. Durch die Projizierung der Kameraarme auf den Boden kann beim Rangieren eine Kollision der Kameraarme mit festen Gegenständen vermieden werden. Die Einblendung kann im Bedarfsfall oder permanent auf der Fahrer- und Beifahrerseite erfolgen. Ähnlich kann beim Rückwärts-Rangieren insbesondere beim Heranfahren an eine Rampe die Position eines Trailer-Hecks besser eingeschätzt werden, wenn dieses auf den Boden projiziert wird. Zusätzlich kann auch die prädizierte Trajektorie des Trailers auf dem Boden angezeigt werden.

Für die richtige Einschätzung der Fahrzeuglänge auch in schwierigen Situationen, insbesondere der Länge einer Fahrzeugkombination kann die Einblendung und Bodenprojektion einer Linie quer zum Fahrzeug an der Hinterkante des Fahrzeughecks vorteilhaft sein. Insbesondere kann der Fahrer durch eine solche verbesserte Einschätzung schnell erkennen, ob im Fahrbetrieb ein Spurwechsel gefahrlos möglich ist. Ähnlich kann auch bodenseitig die prädizierte Fahrspur des Fahrzeugs, insbesondere eines Trailers als hervorgehobenes Fahrfeld oder als Fahrfeldbegrenzungslinie bei einer Vorwärtsfahrt neben dem Fahrzeug und bei einer Rückwärtsfahrt hinter dem Fahrzeug eingeblendet werden. Auch dadurch wird gerade bei Kurvenfahrten die Einschätzung einer Fahrzeugbewegung erleichtert. Dieses Konzept kann auch bei reinen Zugmaschinen oder als Anhänge-/Aufsattelhilfe ausgeführt sein.

Möglicherweise gefährdete Verkehrsteilnehmer, zum Beispiel Fußgänger, Radfahrer oder andere Fahrzeuge, deren Ort und eventuelle Gefährdung insbesondere mittels Fahrerassistenzsystemen wie Abbiege- oder Spurwechselassistenzsystemen erkannt wird, können vorteilhaft mit einer eingeblendeten Objektmarkierung hervorgehoben werden. Als Objektmarkierungen können dabei eingeblendete Umrahmungen und/oder spezielle Fahrtgebungen und/oder Helligkeitsänderungen verwendet werden. Die Einblendung kann auf der Fahrer- oder Beifahrerseite erfolgen.

Bei nahen Hindernissen im Fahrbereich, insbesondere bei einer selbsttätig erkannten Kollisionsgefahr zwischen solchen Objekten und dem eigenen Fahrzeug, sollen diese Objekte für ein besseres Erkennen und als Warnung durch eine eingeblendete Objektmarkierung hervorgehoben werden. Eine solche Objektmarkierung kann durch eine Einfärbung und/oder durch Markierungslinien erfolgen, wobei insbesondere bei einer Kollisionsgefahr eine Objektmarkierung gegebenenfalls blinkend herausgestellt werden kann. Die Einblendung kann je nach der betroffenen Fahrzeugseite auf der Fahrer- oder Beifahrerseite erfolgen.

Vorteilhaft sollen zudem situationsbedingt als eingeblendete Informationsdarstellungen relevante Daten betreffend andere Verkehrsteilnehmer eingeblendet werden, die von diesen an das eigene Fahrzeug übermittelt und/oder über eine Sensorik ermittelt worden sind. Konkret kann dies ein Abstand eines anderen Verkehrsteilnehmers zum eigenen Fahrzeugheck sein, beispielsweise als Pfeil mit einer Abstandsangabe zu einer eingeblendeten Hecklinie. Zusätzlich kann noch die geschwindigkeitsabhängige Annäherungsdauer eingeblendet werden. Weiter soll der andere Verkehrsteilnehmer markiert werden, von dem die relevanten Daten übermittelt worden sind.

Es kann in bestimmten Fahrsituationen notwendig oder zumindest hilfreich sein, im Monitorbild Texte, beispielsweise auf Schildern oder Einsatzfahrzeugen zu lesen. Da diese im dargestellten Kamerabild aufgrund der spiegelähnlichen Darstellung seitenverkehrt sind, können die Texte wenn überhaupt nur schwierig und langsam gelesen werden. Das gleiche Problem ergibt sich gegebenenfalls auch bei Verkehrszeichen. Es wird daher vorgeschlagen, dass in der rückspiegelähnlichen Darstellung des Monitorbildes mittels einer Schrifterkennung und/oder einer Verkehrszeichenerkennung seitenverkehrt gezeigte Schriftzüge und/oder seitenverkehrt gezeigte Verkehrszeichen erkannt und durch einen Algorithmus zurückgespiegelt und seitenrichtig dargestellt werden. Gegebenenfalls kann zusätzlich eine Hervorhebung durch eine Neueinfärbung und/oder Vergrößerung durchgeführt werden.

Bei Dunkelheit sind im Monitorbild nicht leuchtende und nicht unmittelbar angestrahlte Objekte nur sehr schlecht zu sehen. Es ist daher vorteilhaft, bei Dunkelheit für die aktuelle Fahrsituation als relevant erkannte Objekte, wie eigene Anhänger, andere Fahrzeuge, Fahrbahnmarkierungen, Personen, etc. im realen, relativ dunklen Monitorbild heller und damit verdeutlicht darzustellen und hervorzuheben.

Besonders vorteilhaft kann das Spiegelersatzsystem genutzt werden, wenn im Monitorbild mittels eines dem Steuergerät zuschaltbaren Programms wenigstens ein virtueller Gegenstand bzw. ein virtuelles Objekt eingeblendet wird, dessen Lage und Größe entsprechend einer aktuellen Fahrsituation und eines realen Gegenstands bzw. Objekts verändert und angepasst wird.

Konkret kann als virtueller Gegenstand ein Trailer/Anhänger und/oder wenigstens ein virtuell stehendes oder fahrendes anderes Fahrzeug eingeblendet werden. Damit können zu Schulungs- und Simulationszecken Fahrten alleine mit dem Zugfahrzeug durchgeführt werden, wobei der Trailer/Anhänger und gegebenenfalls andere Fahrzeuge virtuell eingeblendet werden. Damit können vorteilhaft die Kosten und Kollisionsrisiken der Mitführung eines realen Trailers und die Verwendung realer Fahrzeuge/Objekte eingespart werden. Durch Beeinflussung von Fahrzeugparametern wie bspw. der Motoransteuerung, kann dem Fahrer beim Mitführen eines virtuellen Trailers zusätzlich ein realistisches Fahrgefühl vermittelt werden.

Erfindungsgemäß sind in einem Monitorbild Objekte dargestellt, die die Sicht auf andere eventuell gefährdete Verkehrsteilnehmer, insbesondere Radfahrer und/oder Fußgänger und/oder PKWs verdecken. Um einen Fahrer auf solche sichtverdeckte Verkehrsteilnehmer hinzuweisen werden entsprechende richtungskorrekte Symbole auf der Sichtverdeckung eingeblendet. Die Erkennung sichtverdeckter Verkehrsteilnehmer erfolgt dabei durch eine objektgebundene Sensorik, durch ein vom Verkehrsteilnehmer mitgeführtes Smartphone mit zugeordneter Kommunikation und Auswertung im Steuergerät, die den sichtverdeckten Verkehrsteilnehmer erkennt und entsprechende Daten an das eigene Fahrzeug liefert.

Eine weitere Nutzung des Spiegelersatzsystems kann vorteilhaft bei erkanntem stillstehenden Fahrzeug, insbesondere bei einem geparkten Fahrzeug erfolgen, wobei als Monitorbild kein aktuelles Kamerabild oder gegebenenfalls ein Kamerabild nur zeitbegrenzt situationsabhängig angezeigt wird. Der oder die Monitore können bei einem solchen Fahrzeugstatus in Verbindung mit weiteren Zusatzfunktionen genutzt werden:
Konkret kann dann das Spiegelersatzsystem vorteilhaft für Überwachungsfunktionen genutzt werden, wobei ein Umfeld des Fahrzeugs mit den Spiegelersatz-Kameras und gegebenenfalls mit weiteren Kameras, insbesondere mit Rückfahrkameras als Monitorbild dargestellt wird. Eine solche Darstellung kann bei möglichst geringer Störung des Fahrers vorteilhaft nur dann erfolgen, wenn eine Bewegung bei einer Auswertung eines noch nicht dargestellten Kamerabilds vom System erkannt wurde. Eine solche Warnfunktion wird zweckmäßig mit einer akustischen Warnung unterstützt.

Alternativ oder zusätzlich kann bei diesem Fahrzeugstatus das Spiegelersatzsystem auch für Telematik-Funktionen genutzt werden, insbesondere zur Anzeige von nächstliegenden Be-/Entladestellen oder von freien Parkplätzen, etc. und/oder zur Anzeige von Inhalten, die für einen Fahrer von Interesse sind, wie Wetter, Internet, etc.

Weiter kann das Spiegelersatzsystem bzw. dessen Monitore als Entertainment-Gerät genutzt werden, wobei das Steuergerät mit Entertainment-Software, zum Beispiel Spiele-Software ausgestattet ist oder werden kann. Eine Bedienung kann dabei durch ein Multifunktionslenkrad und/oder eine separate Steuereinheit erfolgen. Weiter kann das Spiegelersatzsystem als Fernsehgerät oder Rundfunkgerät oder zur Wiedergabe von Videoinhalten genutzt werden. Ein zugeordneter Monitor soll dabei schwenk- und drehbar gestaltet sein, damit ein Fahrer diesen optimal auf seine Sitz- oder Liegeposition einstellen kann.

Weiter kann das Spiegelersatzsystem gegebenenfalls wenigstens einen Monitor mit einem integrierten Touchdisplay aufweisen, der als Tablet-PC mit entsprechender Software nutzbar ist. Eine solche Software kann insbesondere auch Spezialsoftware umfassen, die speditionsspezifisch und auch zur Anzeige von Fahrzeugdaten ausgestattet sein kann.

Die sich mit den nebengeordneten Ansprüchen ergebenden Vorteile sind identisch mit den zuvor genannten Vorteilen des Spiegelersatzsystems, so dass zur Vermeidung von Wiederholungen auf die zuvor gemachten Ausführungen verwiesen wird.

Anhand einer Zeichnung werden Ausführungsbeispiele der Erfindung näher erläutert.

Es zeigen:
- Fig. 1: ein beifahrerseitiges Außenspiegelsystem eines Nutzfahrzeugs und einen Monitor eines Spiegelersatzsystems,
- Fig. 2: schematisiert die Lage von zwei Monitoren eines Spiegelersatzsystems im Fahrerhaus eines Nutzfahrzeugs,
- Fig. 3 bis 6: Monitorbilddarstellungen mit unabhängig von Kamerabilddarstellungen eingeblendeten Informationsanzeigen,
- Fig. 7 bis 18: Monitorbilddarstellungen mit eingeblendeten Informationsdarstellungen, die jeweils perspektivisch korrekt als sogenannte "Augmented Reality" im Monitorbild in eine Bilddarstellung eingefügt sind.

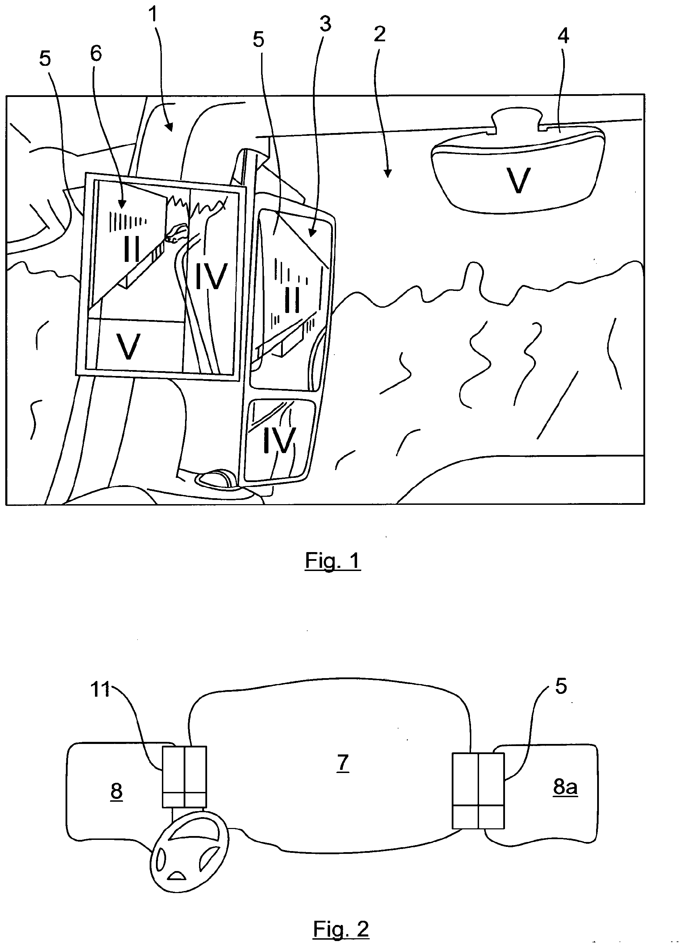

In Fig. 1 ist ein Ausschnittbereich eines vorderen beifahrerseitigen Fensterholms 1 eines Fahrerhauses in der Blickrichtung eines Fahrers gezeigt, wo beispielhaft ein reales Spiegelsystem 2 mit einem Doppel-Außenspiegel 3 und einem weiteren Spiegel 4 angeordnet ist. Der Doppel-Außenspiegel 3 weist zwei Spiegelflächen II und IV auf, wobei mittels der Spiegelfläche II die zugeordnete rückwärtige Seitenansicht eines Trailers 5 sowie das nähere Seitenumfeld erfasst wird. Mit der zweiten unteren Spiegelfläche IV wird in Verbindung mit einer anderen Spiegelkrümmung ein anschließendes weiteres seitliches Umfeld mit anderer Vergrößerung und Verzerrung erfasst. Mit der Spiegelfläche V des Spiegels 4 wird insbesondere zur besseren Erkennung von Fahrradfahrern und Fußgängern ein Bereich unmittelbar seitlich neben dem Führerhaus abgebildet.

Weiter ist im Fahrerhausinnenbereich am Fensterholm 1 ein Monitor 5 eines Spiegelersatzsystems angeordnet, welches als weitere, hier nicht dargestellte Komponenten Kameras und ein Steuergerät aufweist. Die Kameras sind hier so positioniert und die Bildverarbeitung im Steuergerät wird so durchgeführt, dass ersichtlich im Monitorbild 6 des Monitors 5 die Abbildungen aus den Spiegeln 3 und 4 in einem einzigen Monitorbild aneinandergrenzend dargestellt sind.

In Fig. 1 ist sowohl das reale Spiegelsystem 2 als auch der Monitor 5 des Spiegelersatzsystems zur Verdeutlichung der Darstellung auf dem Monitorbild 6 gezeigt. Üblicherweise kann jedoch bei Verwendung eines Spiegelersatzsystems das reale Spiegelsystem 2 entfallen und eingespart werden, so dass sich eine Anordnung entsprechend der schematischen Darstellung in Fig. 2 ergibt: hier sind schematisch eine Frontscheibe 7 und Seitenscheiben 8, 8a sowie ein Lenkrad 9 eines Fahrerhauses dargestellt mit einem beifahrerseitigen Monitor 5 und einem fahrerseitigen Monitor 11 des Spiegelersatzsystems.

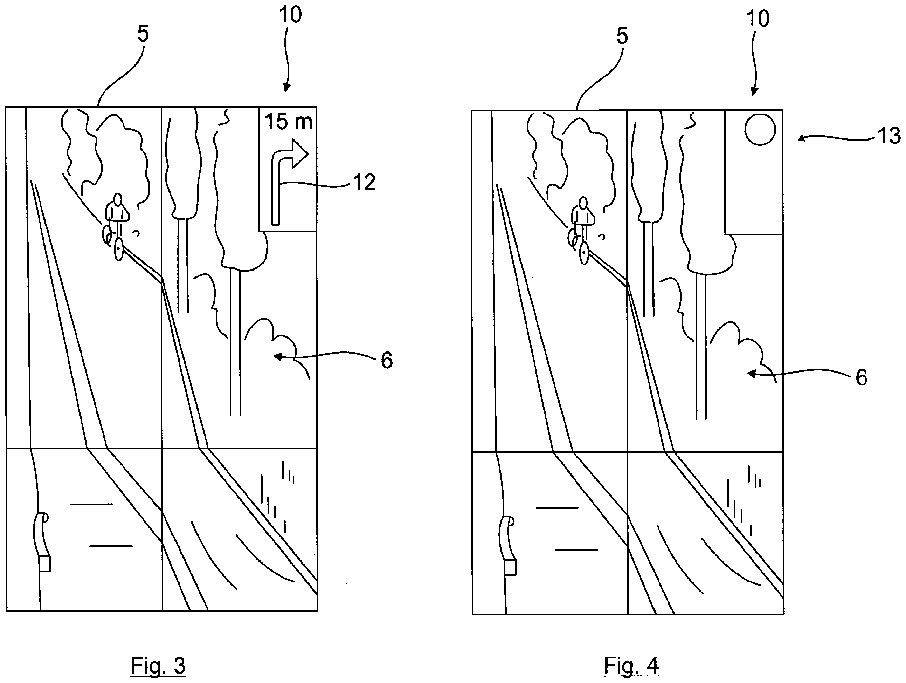

In den folgenden Fig. 3 bis 6 sind unabhängig vom jeweiligen Kamerabild in einem Teilbereich des Monitorbilds Informationsdarstellungen eingeblendet:
In Fig. 3 ist hier konkret in einem oberen Eckbereich 10 des Monitorbilds 6 als Informationsdarstellung ein Abbiegepfeil 12 mit Entfernungsangabe aus einem Navigationssystem angezeigt (zusätzlich zu einer an einem anderen Ort). Die Einblendung kann permanent oder im Bedarfsfall sowie fahrer- und beifahrerseitig erfolgen.

Ähnlich wird in Fig. 4 zusätzlich zu einer Anzeige in einem Kombiinstrument ein Blinkersignal 13 fahrer- und beifahrerseitig dargestellt.

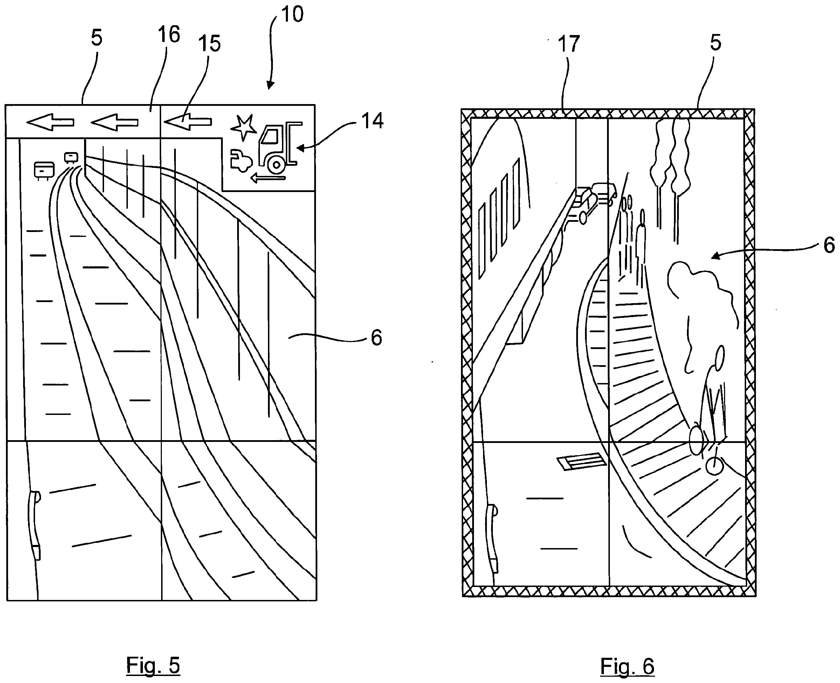

In Fig. 5 ist im oberen rechten Eckbereich 10 des Monitorbilds 6 eine graphisch gestaltete Auffahrwarnung 14 eingeblendet, an die sich wechselseitig blinkende Pfeile 15 zur Steigerung der Aufmerksamkeit in einem oberen Randbalken 16 anschließen. Ähnlich können andere Warnungen aus anderen Fahrerassistenzsystemen für eine gesteigerte Blickzuwendung gestaltet sein. Eine Einblendung kann im Bedarfsfall auf der Fahrer- und/oder Beifahrerseite erfolgen.

In Fig. 6 ist ein allgemeines Warnkonzept dargestellt, bei der ein umlaufender Rahmen 17 (strichliert eingezeichnet) bei einer Warnsituation insbesondere in Verbindung mit einem Abbiege- und Spurwechselassistenzsystem blinkt. Zudem kann der Rahmen 17 in einer Warnfarbe, vorzugsweise in Rot blinken. Die Einblendung erfolgt hier im Bedarfsfall und kann durch ein akustisches Signal ergänzt werden.

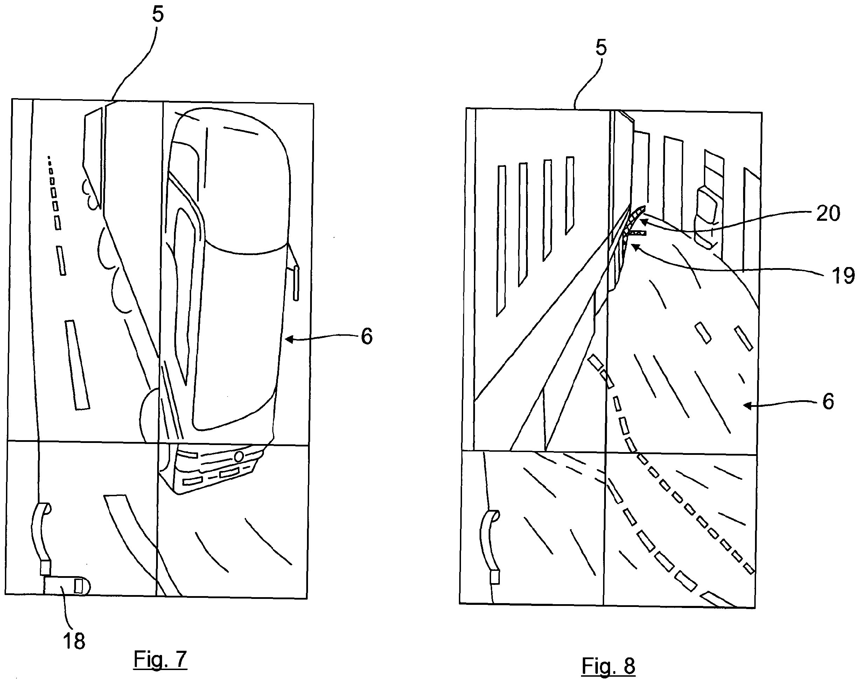

In den weiteren Fig. 7 bis 18 sind Informationsdarstellungen jeweils perspektivisch korrekt als sogenannte "Augmented Reality" in die Bilddarstellung im Monitorbild eingeblendet:
In Fig. 7 ist zur Kollisionsvermeidung ein Kameraarm 18 mit seinen realen Abmessungen auf den Boden projiziert. Eine Einblendung kann im Bedarfsfall oder permanent fahrer- und beifahrerseitig erfolgen.

Ähnlich ist in Fig. 8 als Rangierhilfe ein Trailer-Heck 19 auf den Boden projiziert und um eine Projektion der prädizierten Trajektorie 20 ergänzt.

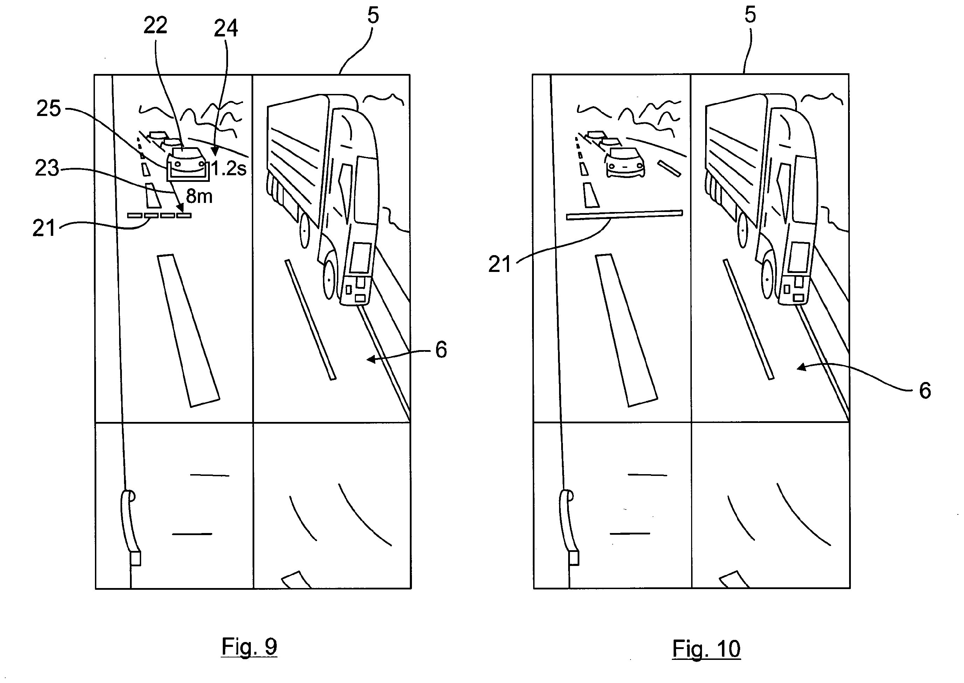

In den Fig. 9 und 10 ist jeweils bodenseitig eine Querlinie 20 an der Hinterkante des Fahrzeughecks eingeblendet, damit der Fahrer die Fahrzeugabmessungen im hinteren Fahrzeugbereich beispielsweise bei einem Spurwechsel besser abschätzen kann.

In Fig. 9 werden Daten zudem von einem nachfolgenden Fahrzeug 22 über dessen Abstand zum eigenen Fahrzeug und über seine Annäherungsdauer übermittelt. Der aktuelle Abstand wird mit einem Pfeil 23 und einer Entfernungsangabe eingeblendet ebenso wird die Annäherungsdauer mit einer Zeitangabe 24 eingeblendet. Zudem wird das Fahrzeug von dem die Daten stammen mit einer Balkenanzeige 25 markiert. Die Farbe der Markierung kann dabei die Kritikalität der Fahrsituation ausdrücken.

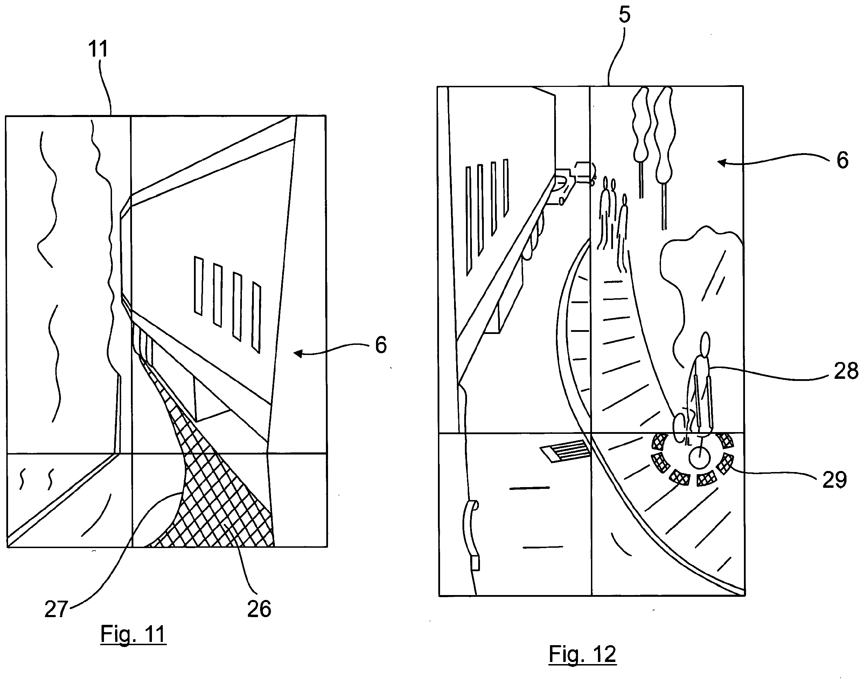

In Fig. 11 ist im beifahrerseitigen Monitor 11 ein Monitorbild 6 beim Abbiegen und Rangieren bei einer Vorwärtsfahrt dargestellt. Zur Unterstützung des Fahrers wird bodenseitig ein im weiteren Bewegungsablauf durchfahrbares Fahrfeld 26 mit einer Fahrfeldbegrenzungslinie 27 eingeblendet. Bei einer Rückwärtsfahrt erfolgt die Einblendung hinter dem Fahrzeug.

Zur schnellen Erkennung und Verdeutlichung einer Gefährdungssituation in Verbindung mit einem anderen Verkehrsteilnehmer wird dieser (hier ein Radfahrer 28) mit einer Objektmarkierung aus der umgebenden Bilddarstellung herausgehoben. Die Objektmarkierung ist hier als blinkende Kreismarkierung 29 ausgeführt, die den Radfahrer 28 bodenseitig umgibt.

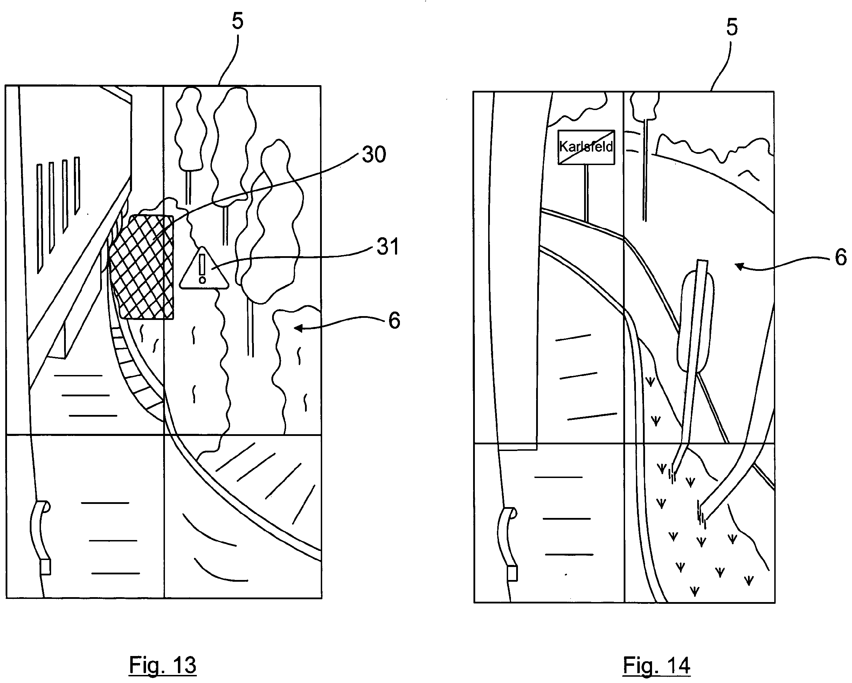

In Fig. 13 ist eine Fahrsituation gegeben, bei der das eigene Fahrzeug mit seinem Trailer nahe an einem Hindernis vorbeifährt, welches durch eine herausgehobene Markierungsfläche 30 (kariert dargestellt) und/oder durch eine Markierungslinie in Verbindung mit einem allgemeinen Warnungszeichen 31 herausgehoben ist, um die Aufmerksamkeit des Fahrers gesteigert auf dieses Hindernis zu lenken.

In Fig. 14 ist im Monitorbild 6 des Monitors 5 ein Straßenschild 32 mit der Aufschrift "Karlsfeld" dargestellt. Ohne erfindungsgemäße Maßnahme würde der Schriftzug entsprechend einer Rückspiegelansicht gespiegelt seitenverkehrt und damit für einen Fahrer nur schwer lesbar gezeigt werden. Es soll daher mittels einer Schrifterkennung der seitenverkehrt gezeigte Schriftzug erkannt und so bearbeitet werden, dass er mittels eines Algorithmus zurückgespiegelt und wie in Fig. 14 dargestellt, seitenrichtig eingeblendet wird. Zusätzlich kann diese Bearbeitung und Einblendung durch eine spezielle Einfärbung und/oder Vergrößerung herausgehoben werden.

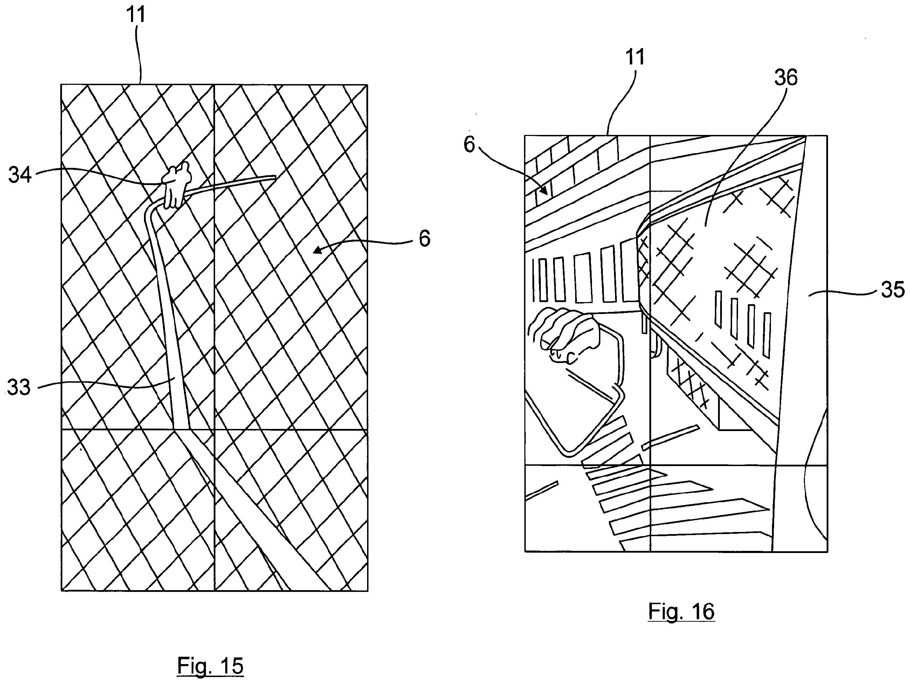

In Fig. 15 ist das Monitorbild 6 des fahrerseitigen Monitors 11 bei einer Fahrt bei Dunkelheit schematisch dargestellt, wobei das Monitorbild 6 insgesamt (entsprechend dem schraffierten Bereich) ohne selbstleuchtende Objekte oder stark angestrahlte Objekte weitgehend dunkel ist. Vom System können jedoch auch relativ dunkle Objekte erkannt und lokalisiert werden. Für den Fahrbetrieb wichtige Objekte, wie eigene Anhänger, andere Fahrzeuge, Fahrbahnmarkierungen 33 und Personen sind jedoch in ihrer Helligkeit verstärkt und für den Fahrer verdeutlicht dargestellt, so dass er solche Objekte zwar in der Realität nur schlecht erkennen würde aber im Monitorbild deutlich sehen kann.

Im fahrerseitigen Monitor ist in Fig. 16 noch der hintere Randbereich 35 einer Zugmaschine gezeigt, wie er im aufgenommenen Kamerabild abgebildet ist. Der sich nach hinten anschließende (schraffiert eingezeichnete) Trailer 36 ist dagegen mittels eines entsprechenden Programms virtuell eingeblendet und bewegt sich virtuell entsprechend der Fahrbewegung der Zugmaschine. Für Schulungs- und Simulationszwecke können durch einen solchen mitgeführten virtuellen Trailer 36 die Kosten und Risiken der Mitführung eines realen Trailers reduziert werden.

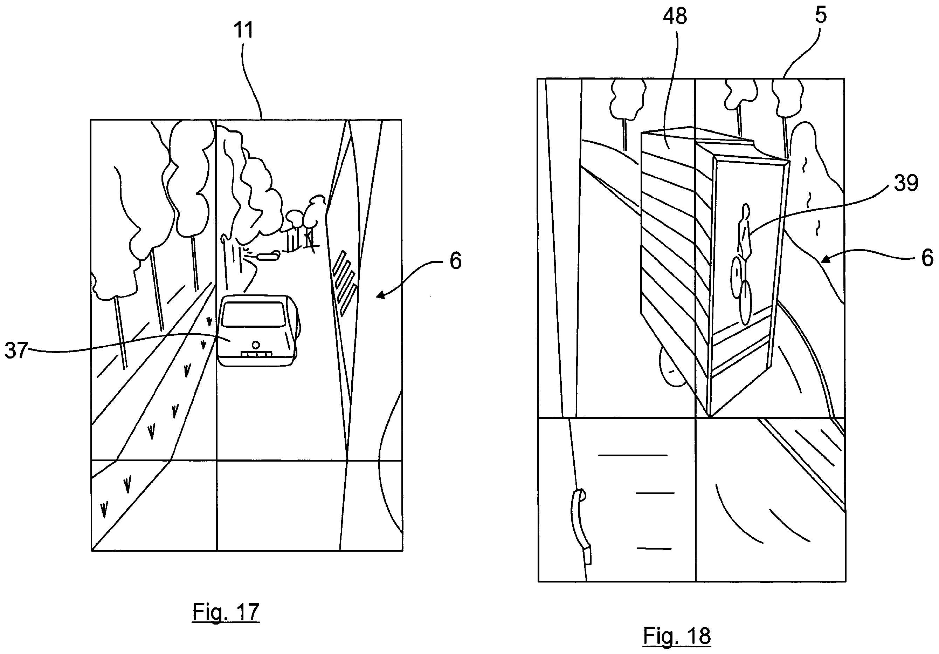

In Fig. 17 ist im fahrerseitigen Monitor 11 im Monitorbild 6 ein virtuelles Fahrzeug 37 auf einer Straße eingeblendet. Damit können einfach und kostengünstig Szenarien auf Testgeländen für Schulungs- und Simulationszwecke nachgestellt werden, wobei Kosten und Risiken der Verwendung realer Fahrzeuge/Objekte eingespart werden können.

In Fig. 18 wird auf dem Monitorbild 6 des Monitors 5 eine Fahrsituation dargestellt, bei der hinter einem abgestellten Anhänger 38 und durch diesen sichtverdeckt ein Fahrradfahrer als möglicherweise gefährdeter Verkehrsteilnehmer fährt. Der sichtverdeckte Fahrradfahrer wird hier als virtuelles Bild durch ein Radfahrersymbol 39 auf dem sichtverdeckenden Objekt, hier dem Anhänger 38 richtungskorrekt eingeblendet. Die Erkennung des sichtverdeckten realen Radfahrers erfolgt mittels eines Smartphones, welches er mit sich führt, und einer drahtlosen Kommunikationsverbindung zum eigenen Fahrzeug. Zusätzlich kann eine solche Erkennung auch mittels einer Sensorik eines anderen Fahrzeugs via einer Car-to-Car-Kommunikation durchgeführt werden.

### Bezugszeichenliste

- 1: Fensterholm
- 2: Spiegelsystem
- 3: Doppel-Außenspiegel
- 4: Spiegel
- 5: Monitor
- 6: Monitorbild
- 7: Frontscheibe
- 8, 8a: Seitenscheiben
- 9: Lenkrad
- 10: Eckbereich
- 11: Monitor
- 12: Abbiegepfeil
- 13: Blinkersignal
- 14: Auffahrwarnung
- 15: Pfeil
- 16: Randbalken
- 17: Rahmen
- 18: Kameraarm
- 19: Trailer-Heck
- 20: Trajektorie
- 21: Querlinie
- 22: Fahrzeug
- 23: Pfeil
- 24: Zeitangabe
- 25: Balkenanzeige
- 26: Fahrfeld
- 27: Fahrfeldbegrenzungslinie
- 28: Radfahrer
- 29: Kreismarkierung
- 30: Markierungsfläche
- 31: Warnungszeichen
- 32: Straßenschild
- 33: Fahrbahnmarkierung
- 34: Personen
- 35: Randbereich
- 36: Trailer (virtuell)
- 37: Fahrzeug (virtuell)
- 48: Anhänger
- 39: Radfahrersymbol
- II: Spiegelfläche/Bildfeld
- IV: Spiegelfläche/Bildfeld
- V: Spiegelfläche/Bildfeld

## Patentansprüche

1. Spiegelersatzsystem als Kamera-Monitor-System (KMS) eines Kraftfahrzeugs, insbesondere eines Nutzfahrzeugs,
mit wenigstens einer ein Umfeld des Kraftfahrzeugs in einem Kamerabild in Echtzeit erfassender und aufnehmender Kamera,
mit wenigstens einem Steuergerät, dem Bilddaten aus der wenigstens einen Kamera zur Bearbeitung zugeführt werden, und
mit wenigstens einem Monitor (5, 11) als Bildschirm im Sichtfeld eines Fahrers, der an das wenigstens eine Steuergerät zur Darstellung eines Monitorbildes (6) des von der wenigstens einen Kamera erfassten aktuellen Kamerabildes angeschlossen ist,
wobei mittels des Steuergeräts in das Monitorbild (6) Informationsdarstellungen eingeblendet werden, die durch Auswertung einer fahrzeugseitigen Sensorik erhalten werden und/oder die durch die Auswertung drahtlos von anderen Fahrzeugen (22) oder ortsfesten Gegenständen übermittelten Daten generiert werden und/oder die virtuell erzeugte Fahrzeuge (37), Fahrzeugteile (36) oder ortsfeste Gegenstände darstellen,
wobei die eingeblendete Informationsdarstellung jeweils perspektivisch korrekt als sogenannte "Augmented Reality" im Monitorbild (6) in eine Bilddarstellung eingefügt ist, wobei im Monitorbild (6) Objekte (38) dargestellt werden, die die Sicht auf andere, eventuell gefährdete Verkehrsteilnehmer, insbesondere Radfahrer und/oder Fußgänger und/oder PKWs, verdecken, und
wobei solche sichtverdeckte Verkehrsteilnehmer mit entsprechenden richtungskorrekten Symbolen (39) eingeblendet werden, **dadurch gekennzeichnet dass**
die Erkennung sichtverdeckterVerkehrsteilnehmer durch eine objektgebundene Sensorik erfolgt, wobei vorgesehen ist, dass die Sensorik durch ein ein vom Verkehrsteilnehmer mitgeführtes Smartphone mit zugeordneter Kommunikation und Auswertung im Steuergerät gebildet ist.

2. Spiegelersatzsystem nach Anspruch 1, **dadurch gekennzeichnet, dass** zwei Monitore, ein fahrerseitiger Monitor (11) an einem fahrerseitigen Fensterholmbereich und ein beifahrerseitiger Monitor (5) an einem beifahrerseitigen Fensterholmbereich (1) angebracht sind, mit denen jeweils in einem Monitorbild (6) in mehreren angrenzenden Bildfeldern (II, IV, V) die Kamerabilder von mehreren, den Bildfeldern zugeordneten Kameras dargestellt werden, wobei bevorzugt vorgesehen ist,
dass die Einblendung von Informationsdarstellungen permanent oder abhängig von bestimmten Fahrsituationen entweder in beiden Monitoren (5, 11) oder im fahrerseitigen Monitor (11) oder beifahrerseitigen Monitor (5) erfolgt und gegebenenfalls durch eine akustische Ausgabe ergänzt wird.

3. Spiegelersatzsystem nach Anspruch 1 oder 2, **dadurch gekennzeichnet, dass** die Informationsdarstellung (12, 13, 14, 15, 16, 17) optisch getrennt vom dargestellten Kamerabild in einem separaten Monitorbildbereich, vorzugsweise angrenzend an das Kamerabild in einem Rand- und/oder Eckbereich (10), eingeblendet wird, wobei bevorzugt vorgesehen ist, dass Informationen eines Navigationssystems (12) und/oder ein Blinkersignal (13) und/oder ein Warnsignal aus einem fahrzeugseitig vorhanden Fahrerassistenzsystem, insbesondere eine graphisch gestaltete Auffahrwarnung (14) und/oder ein Signalstatus einer Ampel aus übermittelten Ampeldaten, in wenigstens einem der Monitore eingeblendet werden.

4. Spiegelersatzsystem nach Anspruch 3, **dadurch gekennzeichnet, dass** bei einer Gefährdungserkennung durch Auswertung von Fahrsituationen an einer Fahrzeugseite an wenigstens einem Monitor (5, 11), vorzugsweise an dem Monitor, der dieser Fahrzeugseite zugeordnet ist, eine optische Warnausgabe erfolgt, insbesondere durch einen Rahmen (17) oder wenigstens einen Balken, der gegebenenfalls blinkt und/oder in einer Warnfarbe eingeblendet wird.

5. Spiegelersatzsystem nach einem der vorhergehenden Ansprüche, **dadurch gekennzeichnet, dass** in der Bilddarstellung eine bodenseitige Aufstandsfläche um das Fahrzeug gezeigt ist und Fahrzeugteile virtuell als eingeblendete Informationsdarstellungen auf den Boden projiziert werden, wobei bevorzugt vorgesehen ist, dass abstehende Kameraarme (18) und/oder ein Trailer-Heck (19) bei Rückwärtsfahrt auf den Boden projiziert werden und gegebenenfalls zusätzlich zum Trailer-Heck eine prädizierte Trajektorie (20) des Trailers angezeigt wird.

6. Spiegelersatzsystem nach einem der vorhergehenden Ansprüche, **dadurch gekennzeichnet, dass** bodenseitig eine Querlinie (21) quer zum Fahrzeug an der Hinterkante des Fahrzeughecks auf den Boden projiziert und eingeblendet ist, und/oder
dass bodenseitig die prädizierte Fahrspur des Fahrzeugs, insbesondere eines Trailers, als Fahrfeld (26) oder Fahrfeldbegrenzungslinie (27) bei Vorwärtsfahrt neben dem Fahrzeug und bei Rückwärtsfahrt hinter dem Fahrzeug eingeblendet ist.

7. Spiegelersatzsystem nach einem der vorhergehenden Ansprüche, **dadurch gekennzeichnet, dass** möglicherweise gefährdete Verkehrsteilnehmer (28), deren Ort und eventuelle Gefährdung, insbesondere mittels Fahrerassistenzsystemen wie Abbiege- oder Spurwechselassistenzsystemen, erkannt werden, mit einer eingeblendeten Objektmarkierung (29) hervorgehoben werden, wobei bevorzugt vorgesehen ist, dass die gefährdeten Verkehrsteilnehmer als Fußgänger, Radfahrer (28) oder anderes Fahrzeug durch eingeblendete Umrahmungen (29) und/oder Farbgebungen und/oder Helligkeitsänderungen markiert werden.

8. Spiegelersatzsystem nach einem der vorhergehenden Ansprüche, **dadurch gekennzeichnet, dass** bei nahen Objekten im Fahrbereich, insbesondere bei einer erkannten Kollisionsgefahr zwischen solchen Objekten und dem eigenen Fahrzeug, diese Objekte durch eine eingeblendete Objektmarkierung hervorgehoben werden, wobei bevorzugt vorgesehen ist, dass diese Objekte durch eine Einfärbung als Markierungsfläche (30) und/oder als Markierungslinie und bei einer Kollisionsgefahr mit den Objekten blinkend hervorgehoben werden.

9. Spiegelersatzsystem nach einem der vorhergehenden Ansprüche, **dadurch gekennzeichnet, dass** als eingeblendete Informationsdarstellungen relevante Daten betreffend andere Verkehrsteilnehmer (22) eingeblendet werden, die von diesen übermittelt und/oder über eine Sensorik ermittelt werden, wobei bevorzugt vorgesehen ist, dass ein Abstand des anderen Verkehrsteilnehmers als Pfeil (23) zu einer eingeblendeten Hecklinie (21) mit einer Entfernungsangabe und/oder eine Annäherungsdauer als Zeiteingabe (24) bis zur Hecklinie (21) angezeigt werden und der andere Verkehrsteilnehmer (22) selbst markiert wird.

10. Spiegelersatzsystem nach einem der vorhergehenden Ansprüche, **dadurch gekennzeichnet, dass** in der rückspiegelähnlichen Darstellung des Monitorbildes (6) mittels einer Schrifterkennung und/oder einer Verkehrszeichenerkennung seitenverkehrt gezeigte Schriftzüge und/oder seitenverkehrt gezeigte Verkehrszeichen erkannt und durch einen Algorithmus zurückgespiegelt und seitenrichtig dargestellt (32) werden, wobei bevorzugt vorgesehen ist, dass gegebenenfalls zusätzlich eine Hervorhebung durch eine Einfärbung und/oder Vergrößerung der Schriftzüge und/oder der Verkehrszeichen durchgeführt wird.

11. Spiegelersatzsystem nach einem der vorhergehenden Ansprüche, **dadurch gekennzeichnet, dass** bei Dunkelheit für die aktuelle Fahrsituation selbsttätig als relevant erkannte Objekte, insbesondere Anhänger, andere Fahrzeuge, Fahrbahnmarkierungen (33) und/oder Personen (34), im sonst relativ dunklen Monitorbild (6) heller und damit verdeutlicht dargestellt werden.

12. Spiegelersatzsystem nach einem der vorhergehenden Ansprüche, **dadurch gekennzeichnet, dass** im Monitorbild (6) mittels eines dem Steuergerät zuschaltbaren Programms wenigstens ein virtueller Gegenstand (36, 37) eingeblendet wird, dessen Lage und Größe entsprechend einer aktuellen Fahrsituation und eines realen Gegenstands verändert und angepasst wird, wobei bevorzugt vorgesehen ist, dass als virtueller Gegenstand ein Trailer/Anhänger (36) und/oder wenigstens ein virtuell stehendes oder fahrendes anderes Fahrzeug (37) eingeblendet wird.

13. Spiegelersatzsystem nach einem der vorhergehenden Ansprüche, **dadurch gekennzeichnet, dass** bei erkanntem stillstehenden Fahrzeug, insbesondere bei einem geparkten Fahrzeug, als Monitorbild (6) kein aktuelles Kamerabild oder ein Kamerabild nur zeitbegrenzt situationsabhängig angezeigt wird, wobei der oder die Monitore für Darstellungen in Verbindung mit weiteren Zusatzfunktionen genutzt werden, wobei bevorzugt vorgesehen ist, dass das Spiegelersatzsystem für Überwachungsfunktionen genutzt wird und dabei ein Umfeld des Fahrzeugs mit den Spiegelersatz-Kameras und gegebenenfalls mit weiteren Kameras, insbesondere mit Rückfahrkameras, dargestellt wird, wobei bevorzugt vorgesehen ist, dass eine solche Darstellung gegebenenfalls in Verbindung mit einer akustischen Warnung nur bei einer erkannten Bewegung in einem Kamerabild erfolgt.

14. Spiegelersatzsystem nach Anspruch 13, **dadurch gekennzeichnet, dass** das Spiegelersatzsystem für Telematik-Funktionen, insbesondere zur Anzeige von nächstliegenden Be-/Entladestellen und von freien Parkplätzen, und/oder zur Anzeige von Inhalten, die für einen Fahrer von Interesse sind, vorzugsweise Wetter und/oder Internet, genutzt wird und/oder dass das Spiegelersatzsystem als mit Entertainment-Software, insbesondere Spiele-Software, ausgestattetes Entertainment-Gerät und/oder als Fernsehgerät und/oder als Rundfunkgerät und/oder zur Wiedergabe von DVDs genutzt wird, wobei bevorzugt vorgesehen ist, dass wenigstens ein Monitor lageeinstellbar angeordnet ist.

15. Spiegelersatzsystem nach Anspruch 13 oder 14, **dadurch gekennzeichnet, dass** das Spiegelersatzsystem wenigstens einen Monitor mit einem integrierten Touchdisplay aufweist und als Tablet-PC mit entsprechender Software genutzt wird, wobei bevorzugt vorgesehen ist, dass die Software Spezialsoftware umfasst, die speditionsspezifisch und/oder zur Anzeige von Fahrzeugdaten ausgestaltet ist.

16. Fahrzeug, insbesondere Nutzfahrzeug, mit einem Spiegelersatzsystem nach einem der vorhergehenden Ansprüche.

17. Verfahren zum Betreiben eines Spiegelersatzsystems eines Fahrzeugs, insbesondere eines Nutzfahrzeugs, nach einem der Ansprüche 1 bis 15.

## Claims

1. Mirror replacement system as a camera monitor system (KMS) of a motor vehicle, in particular a commercial vehicle,
having at least one camera which captures and records an environment of the motor vehicle in a camera image in real time,
having at least one control device which is supplied with image data from the at least one camera for processing, and
having at least one monitor (5, 11) as a screen in the field of view of a driver, which monitor is connected to the at least one control device for the purpose of representing a monitor image (6) of the current camera image captured by the at least one camera,
wherein the control device is used to display information representations in the monitor image (6), which information representations are obtained by evaluating a vehicle sensor system and/or are generated by evaluating data wirelessly transmitted by other vehicles (22) or stationary objects and/or represent virtually generated vehicles (37), vehicle parts (36) or stationary objects,
wherein the displayed information representation is respectively inserted into an image representation in a perspectively correct manner as so-called "augmented reality" in the monitor image (6),
wherein objects (38) which conceal the view of other road users possibly in danger, in particular cyclists and/or pedestrians and/or cars, are represented in the monitor image (6), and
wherein such road users concealed from view are displayed with corresponding symbols (39) having the correct direction, **characterized in that** road users concealed from view are detected by means of an object-based sensor system, wherein provision is made for the sensor system to be formed by a smartphone carried by the road user with associated communication and evaluation in the control device.

2. Mirror replacement system according to Claim 1, **characterized in that** two monitors are fitted, a driver-side monitor (11) fitted to a driver-side window column area and a passenger-side monitor (5) fitted to a passenger-side window column area (1), and are each used to represent, in a plurality of adjacent image fields (II, IV, V) in a monitor image (6), the camera images from a plurality of cameras assigned to the image fields, wherein provision is preferably made
for the display of information representations to be carried out permanently or on the basis of particular driving situations either on both monitors (5, 11) or on the driver-side monitor (11) or the passenger-side monitor (5) and to possibly be supplemented with an acoustic output.

3. Mirror replacement system according to Claim 1 or 2, **characterized in that** the information representation (12, 13, 14, 15, 16, 17) is displayed in a manner optically separated from the represented camera image in a separate monitor image area, preferably adjacent to the camera image in an edge and/or corner area (10), wherein provision is preferably made for information from a navigation system (12) and/or an indicator signal (13) and/or a warning signal from a vehicle driver assistance system, in particular a graphic collision warning (14) and/or a signal status of a traffic light from transmitted traffic light data, to be displayed on at least one of the monitors.

4. Mirror replacement system according to Claim 3, **characterized in that**, if a danger is detected by evaluating driving situations, an optical warning output is effected on at least one monitor (5, 11) on a vehicle side, preferably on the monitor assigned to this vehicle side, in particular by means of a frame (17) or at least one bar which possibly flashes and/or is displayed in a warning colour.

5. Mirror replacement system according to one of the preceding claims, **characterized in that** a supporting surface on the ground is shown around the vehicle in the image representation and vehicle parts are projected in a virtual manner onto the ground as displayed information representations, wherein provision is preferably made for protruding camera arms (18) and/or a trailer rear (19) to be projected onto the ground during reversing and a predicted trajectory (20) of the trailer is possibly displayed in addition to the trailer rear.

6. Mirror replacement system according to one of the preceding claims, **characterized in that**, on the ground, a transverse line (21) is projected onto the ground and displayed transversely with respect to the vehicle on the rear edge of the vehicle rear, and/or
**in that** the predicted lane of the vehicle, in particular of a trailer, is displayed on the ground, as a driving field (26) or driving field boundary line (27), beside the vehicle when moving forward and behind the vehicle when reversing.

7. Mirror replacement system according to one of the preceding claims, **characterized in that** road users (28) possibly in danger, the location of said road users and a possible danger are detected, in particular by means of driver assistance systems such as turning or lane change assistance systems, and are highlighted with a displayed object marking (29), wherein provision is preferably made for the road users in danger to be marked as pedestrians, cyclists (28) or another vehicle by means of displayed borders (29) and/or colours and/or brightness changes.

8. Mirror replacement system according to one of the preceding claims, **characterized in that**, in the case of nearby objects in the driving area, in particular if a risk of a collision between such objects and the driver's own vehicle is detected, these objects are highlighted by means of a displayed object marking, wherein provision is preferably made for these objects to be highlighted by colouring them as a marking area (30) and/or as a marking line and to be highlighted in a flashing manner if there is a risk of a collision with the objects.

9. Mirror replacement system according to one of the preceding claims, **characterized in that** relevant data relating to other road users (22) which are transmitted by the latter and/or are determined via a sensor system are displayed as displayed information representations, wherein provision is preferably made for a distance of the other road user to a displayed rear line (21) to be displayed as an arrow (23) with an indication of distance and/or for a period needed to approach the rear line (21) to be displayed as a time input (24) and for the other road user (22) itself to be marked.

10. Mirror replacement system according to one of the preceding claims, **characterized in that**, lettering shown in an inverted manner and/or traffic signs shown in an inverted manner is/are recognized by means of character recognition and/or traffic sign recognition in the representation of the monitor image (6) which is similar to a rear-view mirror and is/are reflected by means of an algorithm and is/are represented (32) in a true-sided manner, wherein provision is preferably made optionally for highlighting to be additionally carried out by colouring and/or increasing the size of the lettering and/or the traffic signs.

11. Mirror replacement system according to one of the preceding claims, **characterized in that**, during darkness, objects automatically identified as relevant to the current driving situation, in particular trailers, other vehicles, road markings (33) and/or persons (34), are represented in a brighter and therefore clarified manner in the otherwise relatively dark monitor image (6).

12. Mirror replacement system according to one of the preceding claims, **characterized in that** at least one virtual object (36, 37), the position and size of which are changed and adapted according to a current driving situation and a real object, is displayed in the monitor image (6) by means of a program which can be connected to the control device, wherein provision is preferably made for a trailer (36) and/or at least one virtually stationary or moving other vehicle (37) to be displayed as a virtual object.

13. Mirror replacement system according to one of the preceding claims, **characterized in that**, if a stationary vehicle is detected, in particular in the case of a parked vehicle, a current camera image is not displayed or a camera image is displayed only for a limited time as the monitor image (6) depending on the situation, wherein the monitor(s) is/are used for representations in connection with further additional functions, wherein provision is preferably made for the mirror replacement system to be used for monitoring functions and for an environment of the vehicle to be represented in this case using the mirror replacement cameras and possibly further cameras, in particular reversing cameras, wherein provision is preferably made for such a representation to be effected possibly in conjunction with an acoustic warning only if a movement is detected in a camera image.

14. Mirror replacement system according to Claim 13, **characterized in that** the mirror replacement system is used for telematic functions, in particular to display closest loading/unloading points and available parking spaces, and/or to display contents which are of interest to a driver, preferably the weather and/or the Internet, and/or **in that** the mirror replacement system is used as an entertainment device equipped with entertainment software, in particular game software, and/or as a TV and/or as a radio and/or to play DVDs, wherein provision is preferably made for at least one monitor to be arranged such that its position can be adjusted.

15. Mirror replacement system according to Claim 13 or 14, **characterized in that** the mirror replacement system has at least one monitor with an integrated touch display and is used as a tablet PC with corresponding software, wherein provision is preferably made for the software to comprise special software which is haulage-specific and/or is configured to display vehicle data.

16. Vehicle, in particular commercial vehicle, having a mirror replacement system according to one of the preceding claims.

17. Method for operating a mirror replacement system of a vehicle, in particular a commercial vehicle, according to one of Claims 1 to 15.

## Revendications

1. Système de substitution de rétroviseur sous la forme d'un système à caméra et moniteur (KMS) d'un véhicule automobile, notamment d'un véhicule utilitaire,
comprenant au moins une caméra qui acquiert et enregistre un environnement du véhicule automobile dans une image de caméra en temps réel,
comprenant au moins un contrôleur auquel sont acheminées des données d'image issues de l'au moins une caméra en vue du traitement, et
comprenant au moins un moniteur (5, 11) faisant office d'écran dans le champ de vision d'un conducteur, lequel est raccordé à l'au moins un contrôleur en vue de représenter une image de moniteur (6) de l'image de caméra actuelle acquise par l'au moins une caméra,
des représentations d'informations étant affichées en incrustation dans l'image de moniteur (6) au moyen du contrôleur, lesquelles sont obtenues par interprétation d'un système de détection côté véhicule et/ou lesquelles sont générées par l'interprétation de données communiquées sans fil par d'autres véhicules (22) ou des objets fixes et/ou lesquelles représentent des véhicules (37), parties de véhicule (36) ou objets fixes générés virtuellement
la représentation d'informations affichée en incrustation étant respectivement insérée dans une représentation d'image selon une perspective correcte sous la forme d'une réalité dite augmentée dans l'image de moniteur (6),
dans l'image de moniteur (6) étant représentés des objets (38) qui dissimulent la vue sur d'autres acteurs du trafic potentiellement mis en danger, notamment des cyclistes et/ou des piétons et/ou des voitures de tourisme, et
de tels acteurs du trafic dissimulés à la vue étant affichés en incrustation avec des symboles (39) correspondants à la direction correcte, **caractérisé en ce que** la reconnaissance des acteurs du trafic dissimulés à la vue est effectuée par un système de détection lié à l'objet, en prévoyant que le système de détection est formé par un Smartphone porté par l'acteur du trafic avec une communication et une interprétation associées dans le contrôleur.

2. Système de substitution de rétroviseur selon la revendication 1, **caractérisé en ce que** deux moniteurs, un moniteur côté conducteur (11) au niveau d'une zone de montant de fenêtre côté conducteur et un moniteur côté passager (5) au niveau d'une zone de montant de fenêtre côté passager (1), sont installés, au moyen desquels les images de caméra de plusieurs caméras associées à des champs d'image sont respectivement représentées dans une image de moniteur (6) dans plusieurs champs d'image (II, IV, V) adjacents, en prévoyant de préférence
**que** l'affichage en incrustation des représentations d'informations s'effectue en permanence ou en fonction de certaines situations de conduite soit dans les deux moniteurs (5, 11), soit dans le moniteur côté conducteur (11) ou dans le moniteur côté passager (5) et est, le cas échéant, complété par une émission sonore.

3. Système de substitution de rétroviseur selon la revendication 1 ou 2, **caractérisé en ce que** la représentation d'informations (12, 13, 14, 15, 16, 17) est affichée en incrustation en étant optiquement séparée de l'image de caméra représentée dans une zone d'image de moniteur séparée, de préférence en étant adjacente à l'image de caméra dans une zone de bord et/ou de coin (10), en prévoyant de préférence que des informations d'un système de navigation (12) et/ou un signal de clignotant (13) et/ou un signal d'alerte en provenance d'un système d'assistance au conducteur présent du côté du véhicule, notamment un avertissement de tamponnement (14) à configuration graphique et/ou un état de signal d'un feu de signalisation provenant de données de feu de stationnement communiquées, sont affichés en incrustation dans au moins l'un des moniteurs.

4. Système de substitution de rétroviseur selon la revendication 3, **caractérisé en ce que** lors de la reconnaissance d'un danger par l'interprétation des situations de conduite au niveau d'un côté du véhicule, l'émission d'une alerte visuelle est effectuée sur au moins un moniteur (5, 11), de préférence sur le moniteur qui est associé à ce côté du véhicule, notamment par un cadre (17) ou au moins une barre qui clignote éventuellement et/ou qui s'affiche en incrustation dans une couleur d'alerte.

5. Système de substitution de rétroviseur selon l'une des revendications précédentes, **caractérisé en ce qu'**une surface de contact au sol autour du véhicule est indiquée dans la représentation d'image et des parties du véhicule sont projetées virtuellement sur le sol sous la forme de représentations d'informations affichées en incrustation, en prévoyant de préférence que des bras de caméra (18) saillants et/ou un arrière de remorque (19) sont projetés sur le sol lors d'une marche arrière et une trajectoire prédite (20) de la remorque est éventuellement affichée en plus de l'arrière de la remorque.

6. Système de substitution de rétroviseur selon l'une des revendications précédentes, **caractérisé en ce que** du côté du sol, une ligne transversale (21) est projetée sur le sol transversalement par rapport au véhicule au niveau du bord arrière de l'arrière du véhicule et affichée en incrustation et/ou
**en ce que** la voie de circulation prédite du véhicule, notamment d'une remorque, est affichée en incrustation sous la forme d'un champ de circulation (26) ou d'une ligne de délimitation de champ de circulation (27), à côté du véhicule lors d'une marche avant et derrière le véhicule lors d'une marche arrière.

7. Système de substitution de rétroviseur selon l'une des revendications précédentes, **caractérisé en ce que** des acteurs du trafic (28) potentiellement mis en danger, leur emplacement et éventuellement le danger sont reconnus, notamment au moyen de systèmes d'assistance au conducteur tels que des systèmes d'assistance au changement de direction ou au changement de voie, sont mis en valeur avec un marquage d'objet (29) affiché en incrustation, en prévoyant de préférence que les acteurs du trafic mis en danger sont marqués en tant que piétons, cyclistes (28) ou autres véhicules par des encadrements (29) affichés en incrustation et/ou des colorations et/ou des changements de luminosité.

8. Système de substitution de rétroviseur selon l'une des revendications précédentes, **caractérisé en ce qu'**en présence d'objets proches dans la zone de circulation, notamment en présence d'un risque de collision reconnu entre de tels objets et le véhicule propre, ces objets sont mis en valeur par un marquage d'objet affiché en incrustation, en prévoyant de préférence que ces objets sont mis en valeur par une coloration sous la forme d'une surface de marquage (30) et/ou sous la forme d'une ligne de marquage et, en présence d'un risque de collision avec les objets, par un clignotement.

9. Système de substitution de rétroviseur selon l'une des revendications précédentes, **caractérisé en ce que** les représentations d'informations affichées en incrustation sont des données pertinentes concernant d'autres acteurs du trafic (22), lesquelles sont communiquées par ceux-ci et/ou déterminées par le biais d'un système de détection, en prévoyant de préférence qu'une distance de l'autre acteur du trafic est affichée sous la forme d'une flèche (23) vers une ligne arrière (21) affichée en incrustation avec une indication de distance et/ou une durée d'approche sous la forme d'une indication de temps (24) jusqu'à la ligne arrière (21) et l'autre acteur du trafic (22) lui-même est marqué.

10. Système de substitution de rétroviseur selon l'une des revendications précédentes, **caractérisé en ce que** des signes indiqués géométriquement inversés et/ou des panneaux de circulation indiqués géométriquement inversés sont reconnus dans la représentation similaire à un rétroviseur de l'image de moniteur (6) au moyen d'une reconnaissance d'écriture et/ou d'une reconnaissance de panneau de circulation et sont reflétés puis représentés (32) dans le bon sens au moyen d'un algorithme, en prévoyant de préférence qu'éventuellement une mise en valeur est effectuée en plus par une coloration et/ou un grossissement des signes et/ou des panneaux de circulation.

11. Système de substitution de rétroviseur selon l'une des revendications précédentes, **caractérisé en ce qu'**en cas d'obscurité pour la situation de circulation actuelle, les objets automatiquement reconnus comme pertinents, notamment la remorque, les autres véhicules, les marquages de la chaussée (33) et/ou les autres personnes (34) sont représentés plus clairs et ainsi de manière perceptible dans l'image de moniteur (6) pour le reste relativement sombre.

12. Système de substitution de rétroviseur selon l'une des revendications précédentes, **caractérisé en ce qu'**au moins un objet (36, 37) virtuel est affiché en incrustation dans l'image de moniteur (6) au moyen d'un programme qui peut être connecté au contrôleur, dont la position et la taille sont modifiées et adaptées conformément à une situation de circulation actuelle et un objet réel, en prévoyant de préférence que l'objet virtuel affiché en incrustation est une remorque (36) et/ou au moins un autre véhicule (37) virtuellement à l'arrêt ou se déplaçant.

13. Système de substitution de rétroviseur selon l'une des revendications précédentes, **caractérisé en ce que** lors de la reconnaissance d'un véhicule à l'arrêt, notamment en présence d'un véhicule en stationnement, aucune image de caméra actuelle n'est affichée comme image de moniteur (6), ou alors une image de caméra est affichée uniquement de manière limitée dans le temps et dépendante de la situation, le ou les moniteurs étant utilisés pour des représentations en association avec d'autres fonctions supplémentaires, en prévoyant de préférence que le système de substitution de rétroviseur est utilisé pour des fonctions de surveillance et, à cette occasion, un environnement du véhicule est représenté avec les caméras de substitution de rétroviseur et éventuellement avec d'autres caméras, notamment avec des caméras de recul, en prévoyant de préférence qu'une telle représentation est éventuellement effectuée en association avec un avertissement sonore uniquement dans le cas d'un mouvement reconnu dans une image de caméra.

14. Système de substitution de rétroviseur selon la revendication 13, **caractérisé en ce que** le système de substitution de rétroviseur est utilisé pour des fonctions télématiques, notamment pour afficher des points de chargement/déchargement proches et des places de stationnement libres, et/ou pour afficher des contenus qui présentent un intérêt pour un conducteur, de préférence la météo et/ou l'Internet, et/ou **en ce que** le système de substitution de rétroviseur est utilisé comme un appareil de divertissement équipé de logiciels de divertissement, notamment de logiciels de jeu, et/ou comme téléviseur et/ou comme récepteur radio et/ou pour la lecture de DVD, en prévoyant de préférence qu'au moins un moniteur est installé avec sa position réglable.

15. Système de substitution de rétroviseur selon la revendication 13 ou 14, **caractérisé en ce que** le système de substitution de rétroviseur possède au moins un moniteur muni d'un écran tactile intégré et est utilisé en tant que tablette PC avec un logiciel correspondant, en prévoyant de préférence que le logiciel comprend un logiciel spécial qui est configuré spécifiquement pour l'expédition et/ou pour l'affichage de données de véhicule.

16. Véhicule, notamment véhicule utilitaire, équipé d'un système de substitution de rétroviseur selon l'une des revendications précédentes.

17. Procédé pour faire fonctionner un système de substitution de rétroviseur d'un véhicule, notamment d'un véhicule utilitaire, selon l'une des revendications 1 à 15.
